(19) Europäisches Patentamt
European Patent Office
Office européen des brevets

(11) **EP 2 149 542 A2**

(12) **EUROPÄISCHE PATENTANMELDUNG**

(43) Veröffentlichungstag:
**03.02.2010 Patentblatt 2010/05**

(51) Int Cl.:
*C05D 3/02* (2006.01) *C05C 3/00* (2006.01)

(21) Anmeldenummer: **09008479.9**

(22) Anmeldetag: **29.06.2009**

(84) Benannte Vertragsstaaten:
**AT BE BG CH CY CZ DE DK EE ES FI FR GB GR HR HU IE IS IT LI LT LU LV MC MK MT NL NO PL PT RO SE SI SK TR**
Benannte Erstreckungsstaaten:
**AL BA RS**

(30) Priorität: **31.07.2008 DE 102008035950**

(71) Anmelder:
• **Hansen, Petra**
  **25920 Risum-Lindholm (DE)**
• **Setter, Rainer**
  **25899 Niebüll (DE)**

(72) Erfinder:
• **Hansen, Petra**
  **25920 Risum-Lindholm (DE)**
• **Setter, Rainer**
  **25899 Niebüll (DE)**

(74) Vertreter: **Biehl, Christian**
  **Boehmert & Boehmert**
  **Anwaltssozietät**
  **Niemannsweg 133**
  **24105 Kiel (DE)**

(54) **Verfahren zur Gewinnung von Calciumcarbonat- und Ammoniumsulfatdünger aus organischem Abfall und Anlage zur Durchführung des Verfahrens**

(57) Verfahren zur Gewinnung von Calciumcarbonat- und Ammoniumsulfatdünger aus organischen Stoffen mit den Schritten: Erwärmen der organischen Stoffe auf eine Temperatur bei der Ammoniak und Kohlendioxid aus dem organischen Stoffe ausgasen, und Einleiten der Gase in eine wässrige Gips-Suspension zur Bildung einer wässrigen, Calciumcarbonat enthaltenden Ammoniumsulfatlösung, gekennzeichnet durch die Schritte Abscheiden und Entfernen des unlöslichen Calciumcarbonats, Aufkonzentrieren der Ammoniumsulfatlösung bis zur Sättigungsgrenze Sättigungsgrenze durch Erwärmen und/oder Erzeugen eines Vakuums, Abkühlen der Ammoniumsulfatlösung auf eine Temperatur bei der die Löslichkeitsgrenze des Ammoniumsulfats unterschritten wird und Abscheiden und Entfernen des unlöslichen Ammoniumsulfats und Trocknen des abgeschiedenen unlöslichen Calciumcarbonat und/oder des unlöslichen Ammoniumsulfats.

FIG. 1

**EP 2 149 542 A2**

**Beschreibung**

Die Erfindung betrifft Verfahren zur Gewinnung von Calciumcarbonat- und Ammoniumsulfatdünger aus organischen Stoffen mit den Schritten Erwärmen des organischen Abfalls auf eine Temperatur bei der Ammoniak aus dem organischen Abfall ausgast, und Einleiten der Gase in eine wässrige Gips-Suspension unter Zugabe von $CO_2$ (bevorzugt aus einem Blockheizkraftwerk; BHKW) zur Bildung einer wässrigen, Calciumcarbonat enthaltenden Ammoniumsulfatlösung.

Ein derartiges Verfahren zur Gewinnung von Stickstoffdünger aus organischen Abfallprodukten ist beispielsweise aus der DE 10 2005 017 077 A1 bekannt, bei dem die Abfälle zugleich hygienisiert und eine Emissionsverminderung von Geruchsstoffen erreicht werden kann.

Nachteilig an dem bekannten Verfahren ist jedoch, dass keine weitere Trennung des Düngers stattfindet und die Zusammensetzung des mit dem bekannten Verfahren erhaltenen Düngers für bestimmte Anwendungen ungeeignet ist.

Aufgabe der Erfindung ist es daher, ein Verfahren bereitzustellen, bei dem mit einfachen Mitteln eine Trennung von Kalkdünger und Ammoniumsulfatdünger ohne weitere chemische Zusatzstoffe erreicht werden kann.

Die Aufgabe wird erfindungsgemäß durch das Verfahren mit den Merkmalen von Anspruch 1 gelöst. Die Unteransprüche geben vorteilhafte Ausgestaltungen der Erfindung wieder.

Der Grundgedanke der Erfindung besteht darin, dass - nach Einleiten der Ammonium- und Kohlendioxidgase in eine (gesättigte) wässrige Gips-Suspension und sich daran anschließender Reaktion zu Calciumcarbonat und Ammoniumsulfat - das unlösliche Calciumcarbonat beispielsweise durch Sedimentation oder Filtration abgeschieden, die verbleibende wässrige Ammoniumsulfatlösung durch Eindampfen aufkonzentriert und anschließend abgekühlt wird, sodass die Löslichkeitsgrenze des Ammoniumsulfats unterschritten wird. Das bei der niedrigeren Temperatur unlösliche Ammoniumsulfat wird darauf durch Sedimentation oder Filtration abgeschieden und aus der bevorzugt im Kreislauf geführten Gips-Suspension entfernt.

Der Vorteil des erfindungsgemäßen Verfahrens gegenüber herkömmlichen Verfahren liegt in der Trennung von Kalkdünger und Ammoniumsulfatdünger über die unterschiedliche Löslichkeit in Wasser, dem Einsatz einer bevorzugt im Kreislauf gefahrenen Gips-Wasser-Suspension und der bevorzugt zusätzlichen Nutzung von Kohlendioxid aus Abgasen z. B. von Verbrennungskraftmaschinen zur Erzeugung von Calciumcarbonat.

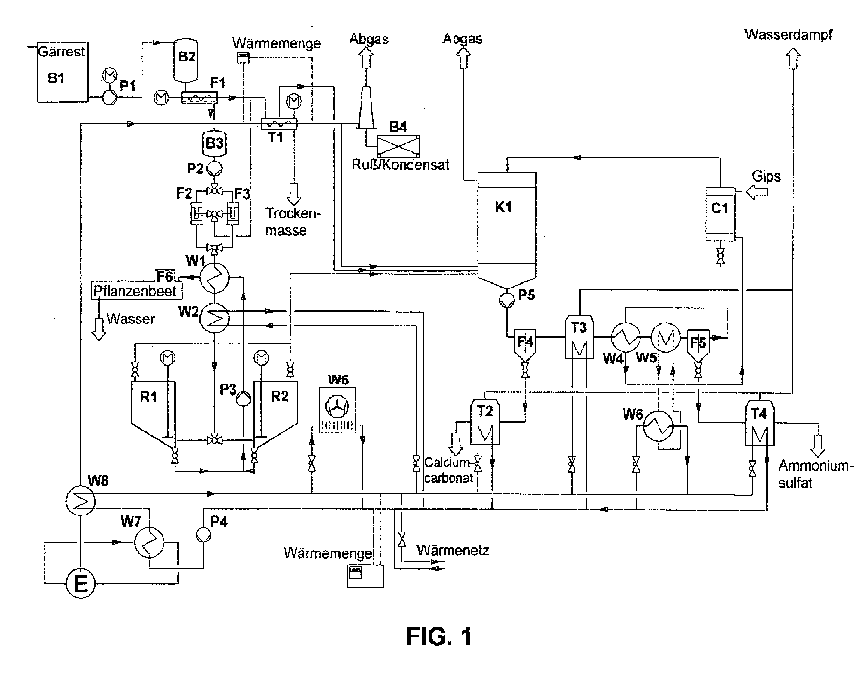

Die Erfindung wird im Folgenden anhand eines in der einzigen Fig. 1 gezeigten, besonders bevorzugt ausgestalteten Ausführungsbeispiels näher erläutert.

Fig. 1 zeigt den schematischen Aufbau einer Anlage zur Durchführung des erfindungsgemäßen Verfahrens und die Stoffflüsse innerhalb der Anlage.

Aus dem Endlager bzw. aus dem Nachgärer B1 werden quasi kontinuierlich Gärreste oder andere geeignete Stoffe über die Pumpe P1 abgezogen. Die abgezogene Menge entspricht bevorzugt der anfallenden Menge, wobei pro Stunde etwa 1.000 kg Gärreste mit einer Trockensubstanz von etwa 6 % anfallen. Die Temperatur der Gärreste beträgt etwa 40 °C an. Alle Mengen und Temperaturangaben sind Anlagenspezifisch und dienen hier nur als Beispiel. Anstelle von Gärresten können auch andere geeignete Stoffs verwendet werden.

Über den Vorlagebehälter B2 gelangen die Gärreste in die mechanische Separation. In einer Schneckenpresse wird die Masse in zwei Teilströme Trocken- und Flüssigphase gespalten.

Beim Trockenphasenteilstrom fällt ca. 200 kg/h mit einer Trockensubstanz (TS) von etwa 30 % an. Die Trockenphase weist ca. 0,3 % Ammoniak, sodass ca. 0,6 kg $NH_3$/h anfallen. Die Temperatur der Trockenphase beträgt ca. 40 °C.

Der Flüssigphasenteilstrom beträgt ca. 800 kg/h mit ca. 0,3 % Ammoniak, sodass ca. 2,4 $NH_3$/h anfallen.

Die Trockenphase wird dem bevorzugt direkt mit Abgas beheizten Schneckentrockner T1 zugeführt und dort auf ca. 150 °C erhitzt, wobei gleichzeitig eine Hygienisierung der Trockenphase erfolgt.

Die flüchtigen $NH_3$-Anteile werden nur thermisch (z. B. über Abgaswärme) oder auch mit chemisch oder/ und mechanischer Unterstützung ausgetrieben und zusammen mit dem ebenfalls entstehenden Wasserdampf zur weiteren Behandlung in den Reaktionsbehälter B4 und somit dem Prozess wieder zugeführt (Trennung Ströme fest/Dampf/$H_2O$, $NH_3$).

Die weiter getrocknete Trockenphase tritt am Ende der Trockenschnecke aus und wird gelagert oder auch weiter verarbeitet.

Das Endmaterial der Trockenphase weist bei ca. 170kg/h eine Trockensubstanz von 40-50 % auf. Die Abgaswärmenutzung beträgt bei P = 45 kW Abgas und z.B. Verdampfung von 50 kg Wasser:

$$P = m(\Delta T \cdot cp + r)$$
$$= 50 kg/h \cdot ((100 - 40) \cdot 4,18 + 2250)$$
$$= 50/3600(60 \cdot 4,18 + 2250)$$
$$= 34,7 kW$$

Die Flüssigphase gelangt von der Schneckenpresse in den Vorlagebehälter B3 und wird von dort über die Pumpe P2 in die Filterkombination F2, F3 gedrückt. Im Filter werden die verbliebenen Schwebstoffe herausgefiltert.

Der Filter wird bevorzugt als Umschaltfilter betrieben, so dass immer ein Filter in Betrieb ist und der andere "entleert" werden kann. Die heraus gefilterten Schwebstoffe werden der Trockenmasse vor der Trockenschnecke beigemischt und unter Abgabe von $NH_3$ und $H_2O$ getrocknet. Der Vorgang erfolgt von Hand halbautomatisch oder auch automatisch.

Über den mit entgaster Flüssigphase betriebenen Wärmetauscher W1 und den Wärmetauscher W2, betrieben mit Abwärme vom Motor, gelangt die jetzt geklärte Flüssigphase chargenweise in die Ausdampfbehälter R1, R2.

Unter Rühren bei ca. 100 °C werden im Behälter $NH_3$, $CO_2$ und Wasserdampf ausgetrieben (evtl. Zusatzheizung über WT und Kreislauf).

$NH_3$ und Wasserdampf werden abgezogen und in dem Reaktor (K1) dem weiteren Prozess wieder zugeführt.

Die entgaste Flüssigphase wird im Gegenstrom über den Wärmetauscher W1 in den Vorfluter oder eine biologische Reinigung geleitet.

Als Reststoffe verbleiben im Wesentlichen Wasser, Schwefel, Phosphor, Kalium und Magnesium. Eine weitere Behandlung zur Nutzung der Inhaltsstoffe bleibt vorbehalten.

Die Nutzung des Pflanzenbeetes (u.U. unter Glas) zur Erzeugung neuer Biomasse oder Algen in 40 °C warmem Wasser bei gleichzeitiger Verwertung der im Wasser verbliebenen Reststoffe sind möglich.

Erfindungsgemäß werden nun im Reaktor K1 die Stoffströme $NH_3$ + $H_2O$ aus Trocken- und Flüssigphase und bevorzugt zusätzliches $CO_2$ aus dem Abgas von Verbrennungskraftmaschinen zusammengeführt und reagieren mit einer im Kreislauf gepumpten bevorzugt gesättigten Gips-Wasser-Suspension bei Atmosphärendruck und Temperaturen von ca. 60 °C. Der Betrieb im Über- und auch Unterdruck ist bei angepassten Temperaturen auch möglich.

Die dabei entstehenden Stoffe sind einerseits Calciumcarbonat aus einer Reaktion von Gips, Wasser und $CO_2$ aus den Gärresten und dem zusätzlich zugeführten Abgas und andererseits Ammoniumsulfat aus einer Reaktion von Gips, Wasser und $NH_3$.

Da Calciumcarbonat im Wasser nicht bzw. nur sehr schwer löslich ist, wird $CaCO_3$ in Form von Kristallen ausgeschieden. Der Boden des Reaktors ist nun so ausgeführt, dass diese Kristalle im Wasserstrom mitgeführt und in einem Abscheider F4 mittels Sedimentation von der Flüssigkeit getrennt werden; daneben sind auch Filtrationsverfahren denkbar. Zweckmäßigerweise werden die aus der Flüssigkeit entfernten Kalkkristalle in einem weiteren Schritt einer Trocknung T2 zugeführt.

Die Lösung von Ammoniumsulfat in Wasser ist stark temperaturabhängig. Diese Temperaturabhängigkeit wird erfindungsgemäß im Folgenden genutzt, um Ammoniumsulfat aus der verbleibenden Ammoniumsulfatlösung auszuscheiden. Hierzu wird die Lösung bis zur Sättigungsgrenze oder in einem späteren Verfahrensschritt durch Verdampfen von Wasseranteilen aufkonzentriert, wobei das Verdampfen des Wassers über Wärmezufuhr oder Vakuum erfolgen oder durch eine Kombination der beiden Verfahren erfolgen kann. Dieses kann beispielsweise im Trockner T3 erfolgen.

In einem sich daran anschließenden Schritt wird diese bei hoher Temperatur gesättigte Lösung bevorzugt mittels eines mit Abwärme betriebenen Adsorber-Kältegeräts abgekühlt und die Löslichkeitsgrenze der Lösung unter- bzw. die Sättigungsgrenze überschritten. Ammoniumsulfat fällt dabei in Kristallform aus der Lösung aus und kann über Sedimentation oder Filtration aus der Lösung entfernt werden. Bevorzugt werden auch diese Kristalle in einem weiteren Schritt getrocknet.

Die verbleibende Calciumcarbonat und Ammoniumsulfat depletierte Gips-Suspension kann dann erneut, gegebenenfalls nach Aufkonzentrieren mit Gips zu einer gesättigten Gipslösung, wieder dem Reaktor K1 zugeführt werden.

Eine Anlage zur Durchführung des Verfahrens weist entsprechend wenigstens einen Reaktionsbehälter zum Austreiben von Ammoniak und Kohlendioxid enthaltenden Gasen aus organischem Abfall auf, der als Schneckentrockner oder Ausdsampfbehälter ausgebildet sein kann. Dieser Reaktionsbehälter T1, R1, R2 ist mittels einer die ausgetriebenen Gase führenden ersten Leitung mit dem Reaktor K1 verbunden, in dem die dem Reaktor K1 zugeführten Gase mit der bevorzugt gesättigten Gips-Suspension vermengt werden, die dem Reaktor K1 über eine zweite Leitung zugeführt wird. Die daraus resultierende wässrige, Calciumcarbonat enthaltende Ammoniumsulfatlösung wird über eine dritte Leitung einem ersten Abscheider F4 zugeführt, der das unlösliche Calciumcarbonat aus dem Kreislauf entfernt

Die verbleibende Ammoniumsulfatlösung wird über eine vierte Leitung vom ersten Abscheider F4 einer mit diesem verbundenen Konzentriereinrichtung T3 zum Aufkonzentrieren der Ammoniumsulfatlösung zugeführt. Das Aufkonzentrieren kann beispielsweise durch Eindampfen der Lösung durch Temperaturerhöhung und/oder Erzeugen eines Vakuums erfolgen.

Darauf wird die aufkonzentrierte Ammoniumsulfatlösung über eine fünfte Leitung in eine Temperiereinrichtung W5 zum Abkühlen der konzentrierten Ammoniumsulfatlösung auf eine Temperatur unterhalb der Löslichkeitsgrenze des Ammoniumsulfats geführt, wobei unlösliches Ammoniumsulfat ausfällt und in einem mit der Temperiereinrichtung W5 über eine sechste Leitung verbundenen zweiten Abscheider F5 abgeschieden wird.

Der Kreislauf schließt sich dadurch, dass der zweite Abscheider F5 über die zweite Leitung mit dem Reaktor K1 verbunden

**Patentansprüche**

1. Verfahren zur Gewinnung von Calciumcarbonat- und Ammoniumsulfatdünger aus organischen Stoffen mit den Schritten:

     - Erwärmen der organischen Stoffe auf eine Temperatur bei der Ammoniak und Kohlendioxid aus dem organischen Stoffe ausgasen, und
- Einleiten der Gase in eine wässrige Gips-Suspension zur Bildung einer wässrigen, Calciumcarbonat enthaltenden Ammoniumsulfatlösung, **gekennzeichnet durch** die Schritte
- Abscheiden und Entfernen des unlöslichen Calciumcarbonats,
- Aufkonzentrieren der Ammoniumsulfatlösung bis zur Sättigungsgrenze Sättigungsgrenze **durch** Erwärmen und/oder Erzeugen eines Vakuums,
- Abkühlen der Ammoniumsulfatlösung auf eine Temperatur bei der die Löslichkeitsgrenze des Ammoniumsulfats unterschritten wird und
- Abscheiden und Entfernen des unlöslichen Ammoniumsulfats und
- Trocknen des abgeschiedenen unlöslichen Calciumcarbonat und/oder des unlöslichen Ammoniumsulfats.

2. Verfahren nach Anspruch 1, **dadurch gekennzeichnet, dass** der wässrigen Gips-Suspension zusätzlich Abgase von Verbrennungskraftmaschinen zugeführt werden.

3. Verfahren nach einem der vorhergehenden Ansprüche, **dadurch gekennzeichnet, dass** die nach Abscheiden und Entfernen des unlöslichen Ammoniumsulfats verbleibende Lösung zur Herstellung der Gips-Suspension verwendet wird.

4. Verfahren nach einem der vorhergehenden Ansprüche, **dadurch gekennzeichnet, dass** das Abscheiden des unlöslichen Calciumcarbonats und/oder des unlöslichen Ammoniumsulfats durch Sedimentation und/oder Filtration erfolgt.

5. Verfahren nach einem der vorhergehenden Ansprüche, **dadurch gekennzeichnet, dass** der organische Abfall aus Gärresten besteht.

6. Vorrichtung zur Gewinnung von Calciumcarbonat- und Ammoniumsulfatdünger aus organischen Stoffen,
**gekennzeichnet durch**

- einen Reaktionsbehälter (T1, R1, R2) zum Austreiben von Ammoniak und Kohlendioxid enthaltenden Gasen aus organischem Abfall,
- einen mittels einer die ausgetriebenen Gase führenden ersten Leitung mit dem Reaktionsbehälter (T1, R1, R2) verbundenen Reaktor (K1) zum Vermengen der dem Reaktor (K1) zugeführten Gase mit einer dem Reaktor (K1) über eine zweite Leitung zugeführten Gips-Suspension zum Erzeugen einer wässrigen, Calciumcarbonat enthaltenden Ammommnsulfatlösung,
- einen mittels einer die wässrige, Calciumcarbonat enthaltende Ammoniumsulfatlösung führenden dritten Leitung mit dem Reaktor (K1) verbundenen ersten Abscheider (F4) zum Abscheiden und Entfernen unlöslichen Calciumcarbonats,
- einer mittels einer die verbleibende Ammoniumsulfatlösung führenden vierten Leitung mit dem ersten Abscheider (F4) verbundenen Konzentriereinrichtung (T3) zum Aufkonzentrieren der Ammoniumsulfatlösung **durch** Erwärmen und/oder Erzeugen eines Vakuums,
- einer mittels einer die aufkonzentrierte Ammoniumsulfatlösung führenden fünften Leitung mit der Konzentriereinrichtung (T3) verbundenen Temperiereinrichtung (W5) zum Abkühlen der konzentrierten Ammoniumsulfatlösung auf eine Temperatur unterhalb der Löslichkeitsgrenze des Ammoniumsulfats,
- einem mittels einer die abgekühlte Ammoniumsulfatlösung führenden sechsten Leitung mit der Temperiereinrichtung (W5) verbundenen zweiten Abscheider (F5) zum Abscheiden des unlöslichen Ammoniumsulfats,

wobei der zweite Abscheider (F5) mit der zweiten Leitung verbunden ist.

7. Vorrichtung nach Anspruch 6, **dadurch gekennzeichnet, dass** der Reaktor (K1) mit einer dem Reaktor (K1) zuführenden Leitung verbunden ist.

FIG. 1

EP 2 149 542 A2

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102005017077 A1